# EUROPÄISCHE PATENTSCHRIFT

(11) **EP 0 707 762 B1**
(45) Veröffentlichungstag und Bekanntmachung des Hinweises auf die Patenterteilung: **03.09.1997**
(21) Anmeldenummer: 94916907.2
(22) Anmeldetag: 15.06.1994
(51) Int. Cl.: H04B 7/04, H04L 1/06, H01Q 21/28, H01Q 1/32

(54) **MOBILFUNKANTENNENANLAGE**
MOBILE RADIO AERIAL INSTALLATION
INSTALLATION D'ANTENNES RADIOTELEPHONIQUE MOBILE

(30) Priorität: 09.07.1993 DE 4322863
(43) Veröffentlichungstag der Anmeldung: 24.04.1996
(73) Patentinhaber: ROBERT BOSCH GMBH, 70442 Stuttgart (DE)
(72) Erfinder: ROSENBERG, Uwe, D-71546 Aspach (DE); CLUSE, Dieter, D-71573 Allmersbach/Tal (DE)
(86) Internationale Anmeldenummer: DE9400666
(87) Internationale Veröffentlichungsnummer: WO9502287

(56) Entgegenhaltungen:
- EP-A- 0 214 806
- EP-A- 0 364 190
- US-A- 3 717 814
- ELECTRONICS LETTERS., Bd.28, Nr.24, 19. November 1992, STEVENAGE GB Seiten 2201 - 2202 SAWAHASHI ET AL. 'TRANSMITTER DIVERSITY EFFECT IN TDMA/TDD MOBILE RADIO TRANSMISSION'
- TRANSACTIONS OF THE INSTITUTE OF ELECTRONICS, INFORMATION AND COMMUNICATION ENGINEERS OF JAPAN, Bd.E74, Nr.6, Juni 1991, TOKYO JP Seiten 1547 - 1555 YAMADA ET AL. 'Base and Mobile Station Antennas for Land Mobile Radio Systems'
- 39TH IEEE VEHICULAR TECHNOLOGY CONFERENCE, Bd.I, Mai 1989 Seiten 353 - 358 CLARK 'CELLULAR RURAL STATISTICAL AREA (RSA) TRANSMIT AND RECEIVE COMBINING'

## Beschreibung

Die Erfindung geht aus von einer Antennenanlage für Basis-Sender-Empfänger-Stationen eines Kommunikationssystems für mobile Funkteilnehmer gemäß Oberbegriff des Anspruches 1 bzw. 6.

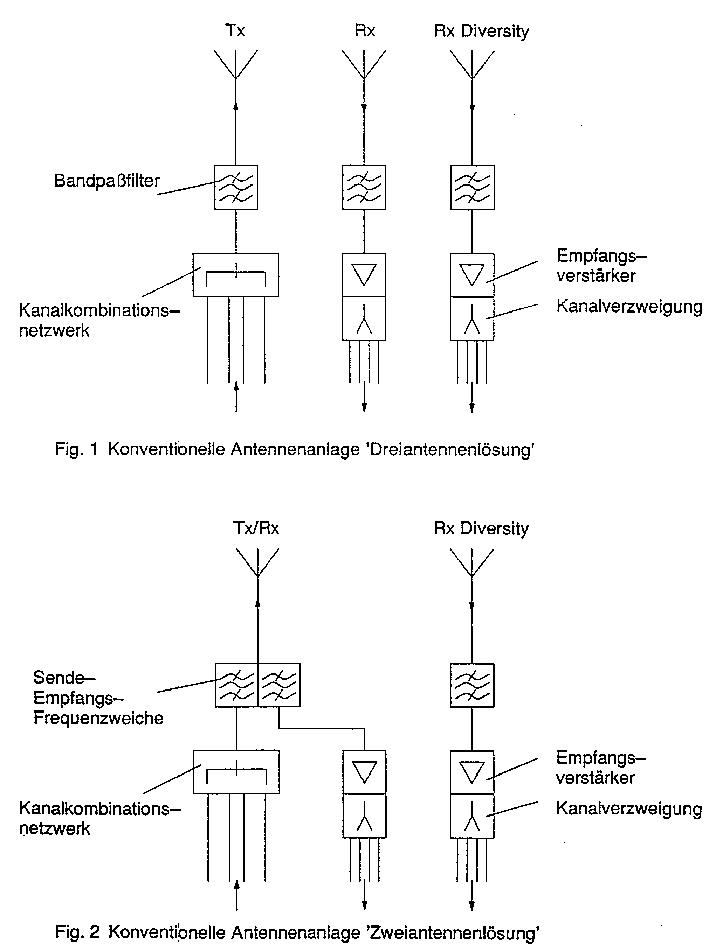

Solche Antennenanlagen sind für den Einsatz in Mobilfunk-Kommunikationssystemen bekannt geworden. Eine dieser Antennenanlagen basiert auf einer Dreiantennenlösung, siehe Figur 1, wobei eine der Antennen ausschließlich als Sendeantenne genutzt wird, wobei-die zu sendenden Kanäle durch Frequenzweichen oder Kopplernetzwerke zusammengefaßt und in die Sendeantenne eingespeist werden. Die beiden anderen Antennen werden nur für den Empfang genutzt, wobei jede Antenne alle Kanäle empfängt und wobei die Antennen so angebracht sind, daß der Empfang der Antennen unabhängig und somit die gewünschte Redundanz gewährleistet ist (Empfangsdiversity).

Eine andere z.B. aus EP-A- 0 214 806 bekannte Antennenanlage verwendet nur zwei Antennen, siehe Figur 2, wobei die eine Antenne als kombinierte Sende- und Empfangsantenne und die andere ausschließlich als Empfangsantenne für den redundanten Empfang der betriebenen Kanäle dienen. Die Sende- und Empfangssignale der kombinierten Antenne werden durch eine entsprechende Frequenzweiche separiert. Auch bei dieser Lösung sind die Sendekanäle über Kombinationsnetzwerke aus Frequenzfiltern oder Kopplern zu kombinieren, bevor sie der Antenne zugeführt werden.

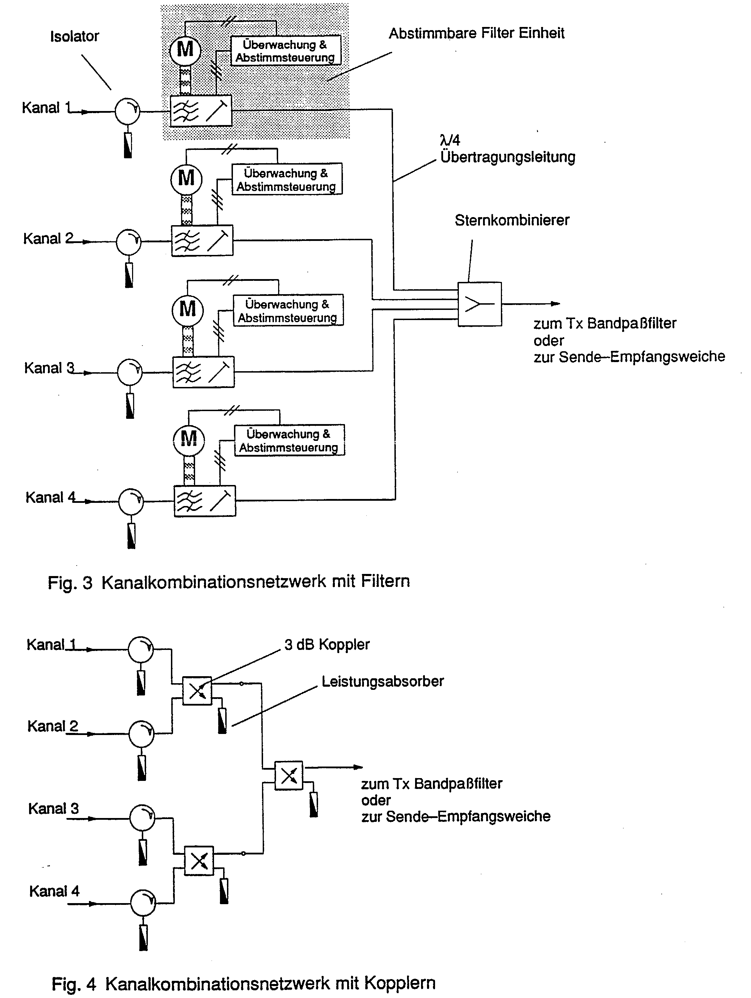

Die Kombinationsnetzwerke, die hierfür notwendig sind, weisen einige wesentliche Nachteile auf. Kombinationsnetzwerke, welche auf Filtern basieren, lassen nur einen minimalen Kanalabstand zu, beispielsweise das Dreifache des Kanalrasters (600 kHz zu 200 kHz). Diese Filter weisen zudem trotz Anwendung von dielektrisch hochgütigen Resonatoren eine nicht unbeträchtliche Dämpfung auf, z.B. bis zu 2,5 dB bei 1850 MHz. In der Regel sind diese Filter auf eine feste Kanalfrequenz abgestimmt und können nur mit einem gekoppelten mechanischen Antrieb auf andere Kanalfrequenzen umgestimmt werden. Dieses Verfahren läßt also keine schnellen Wechsel der Kanalfrequenzen zu, wie es oft in modernen Systemen gewünscht wird. Ein Kanalkombinationsnetzwerk mit Filtern zeigt die Figur 3, und es ist ersichtlich, wie groß und komplex eine solche Anlage mit Überwachung und Abstimmsteuerung ausfällt.

Kombinationsnetzwerke auf der Basis von Hybriden sind dagegen sehr kompakt, lassen einen sehr engen Kanalabstand zu und erlauben auch einen schnellen Wechsel der Kanalfrequenzen im System, da ein Abstimmen entfällt. Allerdings weisen sie systembedingt eine hohe Durchgangsdämpfung auf: Bei dem VierkanalKombinationsnetzwerk mit 3-dB-Kopplern gemäß Figur 4 erhält man für jeden Kanal eine Verlustleistung von mehr als 6 dB. Ein ähnliche Vorrichtung ist z.B. aus US-A- 3 717 814 bereits bekannt.

Ein weiterer Nachteil der bekannten Antennenanlagen besteht darin, daß bei der Einspeisung von mehreren Sendesignalen auf eine Sendeantenne Intermodulationssignale erzeugt werden, welche die Funktion des Systems beeinträchtigen können. Dabei steigt die Wahrscheinlichkeit, daß diese Intermodulationsprodukte auf die Frequenzbänder von Empfangskanälen zu liegen kommen, exponentiell mit der Anzahl der eingespeisten Sendekanäle an. Außerdem steigt auch die Störleistung sehr stark mit der Anzahl der Sendekanäle an. Besonders nachteilig wirkt sich dies bei der Zweiantennenlösung (Fig. 2) aus, weil hier die Signale ohne Isolation zum Empfangsverstärker gelangen, während bei der Dreiantennenlösung gemäß Figur 1 eine Antennenentkopplung von etwa 30 dB berücksichtigt werden kann. Deshalb wird bei vielen Anwendungen die aufwendigere Dreiantennenlösung bevorzugt.

Durch die Deutsche Patentschrift 35 08 285 ist eine Funküberleitstelle für ein Mobilfunknetz bekanntgeworden, wobei als Antennenanordnung eine gerade Anzahl von Rundstrahlern mit jeweils Sender-Empfängergarnituren vorgesehen sind, die gleichmäßig verteilt auf dem Umfang eines Kreises angeordnet sind, und wobei die Empfänger der Sender-Empfängergarnituren als Diversity-Empfänger ausgebildet sind, denen jeweils zwei Rundstrahler der Antennenanordnung als Empfangsantennen für den Empfang eines ankommenden Signals auf zwei Wegen dienen und jedem der Rundstrahler der Antennenanordnung eine gleiche Anzahl von Sendern gemeinsam zur Verfügung gestellt-sind.

In der Deutschen Offenlegungsschrift 31 45 992 ist eine digitale Mobilfunkanlage hoher Kapazität beschrieben, wobei die digitale Feststation eine Vielzahl von Antennenelementen enthält, welche sowohl in Empfangsrichtung als auch in Senderichtung mit Raumdiversity arbeiten.

Beiden Mobilfunkanlagen gemein ist, daß sie im Zeitmultiplex arbeiten und mittels Schalter jeweils zum abwechselnden Sende- oder Empfangsbetrieb umschalten.

Der vorliegenden Erfindung lag die Aufgabe zugrunde, eine Antennenanlage der eingangs genannten Art anzugeben, welche auch beim Betrieb mehrerer Kanäle eine Beeinträchtigung des Systems durch Intermodulationsprodukte vermeidet und welche eine hohe Kanalflexibilität und geringe Durchgangsdämpfungen aufweist. Zudem soll die Antennenanlage möglichst wenig aufwendig sein.

Gelöst wird diese Aufgabe durch die Merkmale des Anspruches 1 bzw. 6. Vorteilhafte Ausführungen der Erfindung ergeben sich aus den Unteransprüchen.

Die erfindungsgemäße Antennenanlage ermöglicht den Betrieb mehrerer Kanäle und weist eine hohe Kanalflexibilität sowie geringe Durchgangsdämpfungen auf, welche auf jeden Fall unter denjenigen bekannter Anlagen liegen. Von weiterem großen Vorteil ist, daß bei der erfindungsgemäßen Antennenanlage eine Beeinträchtigung durch Intermodulationsprodukte nicht nur vermindert ist, sondern auch in der Praxis vermieden ist.

Das wirkt sich nicht nur bei einem Einsatz im Mobilfunknetz D (DMCS 900) aus, sondern auch bei dem geplanten E-Netz. Beim D-Netz liegt der Empfangsbereich bei 890 bis 915 MHz und der Sendebereich bei 935 bis 960 MHz, damit sind bei einer Bandbreite von 25 MHz und einem Abstand von 20 MHz noch 5 MHz gefährdet.

Beim E-Netz liegt der Empfangsbereich bei 1710 bis 1785 MHz und der Sendebereich bei 1805 bis 1880 MHz, bei einer Bandbreite von 75 MHz und einem Abstand von 20 MHz sind hier dagegen 55 MHz gefährdet. Besonders kritisch in konventionellen Antennenanlagen wirken sich Intermodulationsprodukte aus, die aus drei Trägern entstehen, da diese höhere Energieanteile aufweisen.

Der Vorteil der vorliegenden Antennenanlage liegt darin, daß diese Intermodulationsprodukte total vermieden werden können und daß eine Beeinträchtigung des Systems durch andere 2-Trägerprodukte auch für das E-Netz so gut wie ausgeschlossen werden kann.

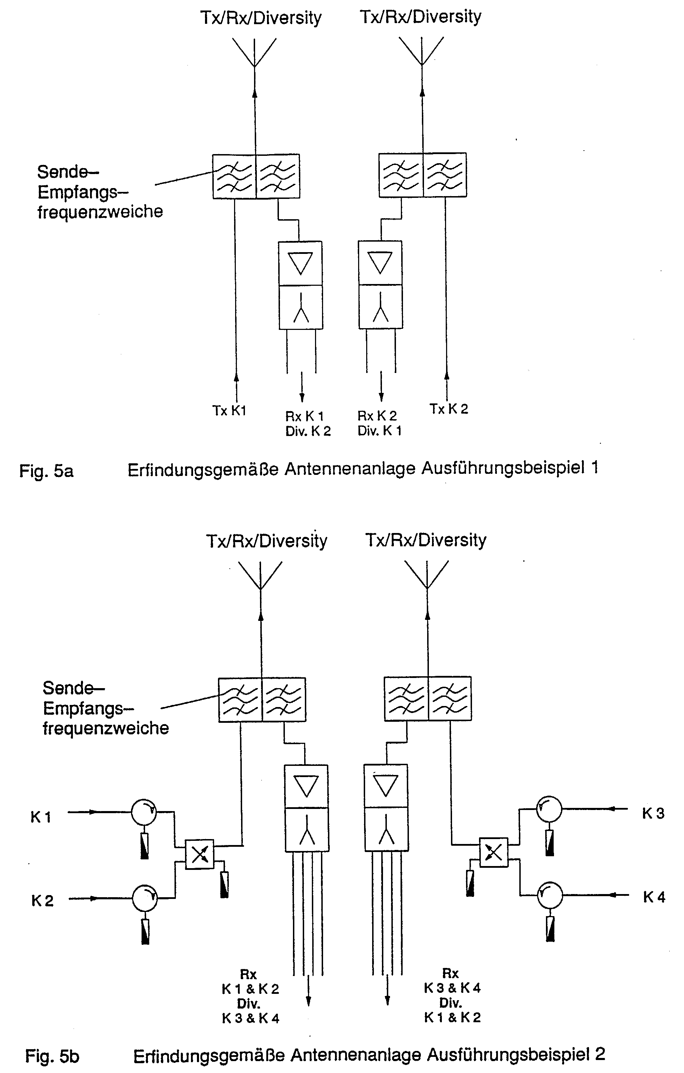

Anhand der Ausführungsbeispiele der Figuren 5a und 5b wird die Erfindung näher beschrieben.

In Figur 5a besteht die Antennenanlage aus zwei Antennen, welche jeweils mit einer Frequenzweiche verbunden ist, welche die Sende- und Empfangssignale trennt. Beiden Antennen wird jeweils ein Sendekanal K1 und K2 zugeführt, während die Signale beider Kanäle von jeder Antenne empfangen werden. Bei dieser Lösung entfällt also ein verlustbehaftetes Kombinationsnetzwerk für die beiden Sendekanäle; das ergibt einen Gewinn von etwa 3 dB. Außerdem können überhaupt keine Intermodulationsprodukte entstehen.

Wenn mehr als zwei Kanäle betrieben werden, können die Sendekanäle auf die beiden Antennen verteilt werden. Die Figur 5b zeigt eine Anordnung für vier Kanäle, wobei je zwei Sendekanäle auf eine Antenne geschaltet werden. In diesem Fall werden die beiden Sendekanäle, welche einer Antenne zugeordnet werden, durch einen 3-dB-Koppler kombiniert, um dann der Sende-Empfangsfrequenzweiche zugeführt zu werden. Durch die Kombination der Kanäle erhöht sich die Durchgangsdämpfung zwar um 3 dB, ist aber immer noch mehr als 3 dB niedriger als bei herkömmlichen Lösungen mit Koppler-Kombinationsnetzwerken, welche ebenfalls eine volle Kanalflexibilität ermöglichen.

Bei der Lösung nach Figur 5b könnten nun auch Intermodulationsprodukte auftreten, da ja zwei Leistungssender an einer Antenne betrieben werden; jedoch kann eine Beeinträchtigung der Station durch geeignete Zuweisung der Sendekanäle auf die beiden Antennen sehr einfach vermieden werden. Außerdem ist die Anzahl der möglichen Intermodulations-Produkte bei zwei Sendern wesentlich niedriger als bei vier Sendern in konventionellen Antennenanlagen. Eine geeignete Zuweisung zweier Sendekanäle ist dagegen wesentlich einfacher zu planen als eine solche von vier Sendekanälen auf eine Antenne.

Wie im Zweikanal-Beispiel der Figur 5a empfangen beide Antennen jeweils alle vier Kanäle und gewährleisten somit den redundanten Empfang der Station.

Eine interessante Version einer erfindungsgemäßen Antennenanlage ist diejenige mit drei Antennen, welche jeweils von einem Sendekanal gespeist werden und welche jeweils die anderen beiden Kanäle empfangen. Hierbei arbeiten sämtliche Sendekanäle mit höchster Leistung, es entfallen teure Kombinations-Netzwerke mit erhöhter Durchgangsdämpfung, und wenn jede Antenne alle drei Kanäle empfangen, erhält man eine doppelte Redundanz.

Auch wenn mehr als vier Kanäle betrieben werden sollen, bietet sich eine erfindungsgemäße Dreiantennen- bzw. Mehrantennenanlage an, wobei jede Antenne mit bis zu zwei Sendekanälen belegt ist. Eine Sechskanalanlage mit drei Antennen hat somit den Vorteil einer um bis zu 6 dB geringeren Durchlaßdämpfung der Sendekanäle und den Vorteil, daß Intermodulationsprodukte vermieden werden, während bei einer Kombination von sechs Sendekanälen auf eine Sendeantenne gemäß Figur 1 eine starke Beeinträchtigung durch unvermeidbare Intermodulationsprodukte eintritt.

## Patentansprüche

1. Antennenanlage für Basis-Sender-Empfänger-Stationen eines Kommunikationssystems für mobile Funkteilnehmer mit mindestens zwei Sende- und ihnen zugeordneten Empfangskanälen, wobei Sender und Empfänger der Basis-Sender-Empfänger-Stationen in getrennten Frequenzbändern arbeiten, mit mindestens zwei Antennen, die für redundanten Empfang ausgeführt sind, dadurch gekennzeichnet, daß jede Antenne als Sendeantenne für mindestens einen Kanal ausgenutzt wird,
daß der sendemäßige Betrieb ohne Redundanz so erfolgt, daß jede Antenne von einem anderen Sendekanal gespeist wird, und daß mindestens eine Antenne für den redundanten Empfang desjenigen Kanals eingerichtet ist, der als Sendekanal auf eine andere Antenne eingespeist wird.

2. Antennenanlage nach Anspruch 1, dadurch gekennzeichnet, daß mindestens eine Antenne für den Empfang eines Kanals eingerichtet ist, der von ihr gesendet wird.

3. Antennenanlage nach Anspruch 1 mit drei Antennen, dadurch gekennzeichnet, daß jede Antenne für den Empfang der von den anderen Antennen gesendeten Kanäle eingerichtet ist.

4. Antennenanlage für zweikanalige Basis-Sender-Empfänger-Stationen nach Anspruch 1 oder 2, mit zwei Antennen, dadurch gekennzeichnet, daß jede Antenne mit einem Sendekanal gespeist wird und für den Empfang beider Kanäle eingerichtet ist.

5. Antennenanlage für vierkanalige Basis-Sender-Empfänger-Stationen nach Anspruch 1 oder 2, mit zwei Antennen, dadurch gekennzeichnet, daß jede Antenne mit zwei Sendekanälen gespeist wird und für den Empfang aller vier Kanäle eingerichtet ist.

6. Antennenanlage für Basis-Sender-Empfänqerstationen eines Kommunikationssystems für mobile Funkteilnehmer mit mindestens einem Sende- und einem ihm zugeordneten Empfangskanal, wobei Sender und Empfänger der Basis-Sender-Empfängerstationen auf getrennten Frequenzen arbeiten, mit mindestens zwei Antennen, die für redundanten Empfang ausgeführt sind, dadurch gekennzeichnet, daß jede Antenne als Sendeantenne für mindestens einen Kanal ausgenutzt wird, daß für mindestens einen Kanal auch der sendemäßige Betrieb mit Redundanz erfolgt und
daß mindestens eine Antenne für den redundanten Empfang desjenigen Kanals eingerichtet ist, der als Sendekanal von einer anderen Antenne gesendet wird.

7. Antennenanlage nach einem der Ansprüche 1 bis 3, mit zwei Antennen, mit drei Sendekanälen, dadurch gekennzeichnet, daß die eine Antenne mit zwei Sendekanälen und die andere Antenne mit einem Sendekanal gespeist werden, welch letzterer zu Broadcastingsfunktionen verwendbar ist.

8. Antennenanlage nach einem der Ansprüche 1 bis 3 oder 6, mit mehr als einem Sendekanal pro Antenne, dadurch gekennzeichnet, daß die Sendekanäle über Koppler-Kombinationsnetze zusammengefaßt werden.

9. Antennenanlage nach einem der vorhergehenden Ansprüche, dadurch gekennzeichnet, daß die Trennung der Sende- und Empfangssignale durch Frequenzweichen erfolgt.

## Claims

1. Aerial installation for base transmitter-receiver stations of a communication system for mobile radio communication subscribers having at least two transmission channels and reception channels assigned to them, transmitters and receivers of the base transmitter-receiver stations operating in separate frequency bands, having at least two aerials, which are designed for redundant reception, characterized in that each aerial is used as a transmission aerial for at least one channel, in that transmission operation takes place without redundancy by each aerial being fed from a different transmission channel, and in that at least one aerial is set up for the redundant reception of that channel which is fed as the transmission channel to a different aerial.

2. Aerial installation according to Claim 1, characterized in that at least one aerial is set up for the reception of a channel which is transmitted from it.

3. Aerial installation according to Claim 1, having three aerials, characterized in that each aerial is set up for the reception of the channels transmitted from the other aerials.

4. Aerial installation for two-channel base transmitter-receiver stations according to Claim 1 or 2, having two aerials, characterized in that each aerial is fed by one transmission channel and is set up for the reception of both channels.

5. Aerial installation for four-channel base transmitter-receiver stations according to Claim 1 or 2, having two aerials, characterized in that each aerial is fed by two transmission channels and is set up for the reception of all four channels.

6. Aerial installation for base transmitter-receiver stations of a communication system for mobile radio communication subscribers having at least one transmission channel and a reception channel assigned to it, transmitters and receivers of the base transmitter-receiver stations operating at separate frequencies, having at least two aerials, which are designed for redundant reception, characterized in that each aerial is used as a transmission aerial for at least one channel, in that for at least one channel transmission operation with redundancy also takes place and in that at least one aerial is set up for the redundant reception of that channel which is transmitted as the transmission channel from a different aerial.

7. Aerial installation according to one of Claims 1 to 3, having two aerials and having three transmission channels, characterized in that the one aerial is fed by two transmission channels and the other aerial is fed by one transmission channel, the latter of which can be used for broadcasting functions.

8. Aerial installation according to one of Claims 1 to 3 or 6, having more than one transmission channel per aerial, characterized in that the transmission channels are combined by means of coupler-combination networks.

9. Aerial installation according to one of the preceding claims, characterized in that the separation of the transmission signals and reception signals takes place by means of frequency diplexers.

## Revendications

1. Installation d'antenne pour des stations d'émetteurs-récepteurs de base d'un système de télécommunication, pour des abonnés radio mobiles avec au moins deux canaux d'émission et de réception leurs correspondant, l'émetteur et le récepteur des stations d'émission-réception de base fonctionnant dans des bandes de fréquence séparées, avec au moins deux antenne qui sont réalisées pour une réception redondante,
caractérisée en ce que
- chaque antenne est utilisée comme antenne d'émission pour au moins un canal,
- le fonctionnement en émission a lieu sans redondance de telle sorte que chaque antenne est alimentée par un autre canal d'émission, et
- une antenne au moins est installée pour la réception redondante du canal qui est alimenté en tant que canal d'émission sur une autre antenne.

2. Installation d'antenne selon la revendication 1,
caractérisée en ce que
l'on dispose au moins une antenne pour la réception d'un canal qui est émis par elle

3. Installation d'antenne selon la revendication 1 avec trois antennes,
caractérisée en ce que
chaque antenne est disposée pour la réception des canaux émis par les autres antennes.

4. Installation d'antenne pour des stations d'émetteurs-récepteurs de base à deux canaux selon la revendication 1 ou 2, avec deux antennes,
caractérisée en ce que
chaque antenne est alimentée par un canal d'émission et est disposée pour la réception de deux canaux.

5. Installation d'antenne pour des stations d'émetteurs-récepteurs de base à quatre canaux selon la revendication 1 ou 2, avec deux antennes,
caractérisée en ce que
chaque antenne est alimentée par deux canaux d'émission et est disposée pour recevoir tous les quatre canaux.

6. Installation d'antenne pour des stations d'émetteurs-récepteurs d'un système de télécommunication pour des abonnés radio mobiles avec au moins un canal d'émission et un canal de réception lui correspondant, l'émetteur et le récepteur des stations d'émetteurs-récepteurs de base fonctionnant sur des fréquences séparées, avec au moins deux antennes, qui sont réalisées pour une réception redondante,
caractérisée en ce que
- chaque antenne est exploitée comme antenne d'émission pour au moins un canal,
- le fonctionnement en émetteur a lieu aussi avec redondance pour au moins un canal et
- l'on dispose au moins une antenne pour la réception redondante du canal qui est émis comme canal d'émission par une autre antenne.

7. Installation d'antenne selon l'une des revendications 1 à 3, avec deux antennes, avec trois canaux d'émission,
caractérisée en ce que
l'on alimente une antenne avec deux canaux d'émission et l'autre antenne avec un canal d'émission, quelque soit la dernière qui soit utilisable pour la radiodiffusion.

8. Installation d'antenne selon l'une des revendications 1 à 3 ou 6, avec plus d'un canal d'émission par antenne,
caractérisée en ce que
les canaux d'émission sont rassemblés au moyen de réseaux combinés à coupleurs.

9. Installation d'antenne selon l'une des revendications précédentes,
caractérisée en ce que
la séparation des signaux d'émission et des signaux de réception a lieu au moyen de circuits diviseurs de fréquence.
